# EUROPEAN PATENT APPLICATION

(11) **EP 2 103 582 A1**
(43) Date of publication of application: **23.09.2009**
(21) Application number: 08005040.4
(22) Date of filing: 18.03.2008
(51) Int. Cl.: C04B 35/622, C04B 35/64, B01D 53/00, B01D 53/32, B32B 18/00

(54) **A method for producing a multilayer structure**

(71) Applicant: Technical University of Denmark, 2800 Kgs. Lyngby (DK)
(72) Inventor: Larsen, Peter Halvor, 4000 Roskilde (DK); Menon, Mohan, 2640 Hedehusene (DK)
(74) Representative: Grünecker, Kinkeldey, Stockmair & Schwanhäusser Anwaltssozietät

(57) **Abstract**

Provided is method for producing a multilayer structure, one method comprising the steps of:
- providing a laminate of a first electrode or electrode precursor layer, an electrolyte layer, and a second electrode or electrode precursor layer;
- folding the laminate at least once; and
- sintering the stack.

Also provided is a method for producing a multilayer structure, comprising the steps of:
- providing an electrolyte layer;
- applying a blocking layer on one edge of the electrolyte layer;
- providing an electrode or electrode precursor layer directly on the electrolyte layer on the side of the electrolyte layer where the blocking layer has been applied so as to obtain a laminate;
- stacking at least two laminates such that the electrolyte layer of each laminate being stacked is applied on the electrode or electrode precursor layer of the stack on which it is stacked; and such that the blocking layer of each laminate being stacked is on the horizontally opposite side of the blocking layer of the laminate on which it is stacked; and
- sintering the stack.

The present invention moreover provides a multilayer structure, obtainable by the above methods.

## Description

### Field of the invention

The present invention relates to methods for producing a multilayer structure or multi-layer coating, and to a multilayer structure obtainable by said methods.

### Background art

Ceramic multilayer structures are generally employed in applications such as microelectronic devices, transducers, membranes, and thermally insulating coatings. Especially in the field of membranes, ceramic multilayer structures are commonly used in form of microstructures sandwiched between current collector layers.

Depending on the desired application of the multilayer structure, the number of required ceramic layers forming the membrane may vary. If, for example, a membrane for flue gas cleaning is desired, an application of growing importance in view of today's desire to protect the global environment, a large number of ceramic layers of the multilayer structure forming part of the membrane is required.

Emission of soot particles (particulate material, PM) and NOx from combustion engines are the cause of substantial environmental as well as health problems especially in larger cities where the air due to intensive traffic contains large quantities of PM and NOx. Both types of emission are severely damaging to human health and can for instance cause lung cancer.

US-A-5,401,372 discloses an electrochemical catalytic reduction cell for the reduction of NOx in an O₂-containing exhaust emission using a gas-diffusion catalyst, such as supported vanadium oxides, with an electron collecting layer, such as a conductive perovs-kite-type oxide, e.g. LSM.

US-A-5,456,807 relates to a method and apparatus for selectively removing nitrogen oxides from gaseous mixtures comprising the absorption of NOx with NOx absorbents, heating release of absorbed NOx, and electrochemical reduction of NOx to N₂ and O₂ in solid oxide cells.

Common methods for producing ceramic multilayer structures being suitable as membranes include tape casting, slip casting, and screen printing processes. However, the methods suggested so far are very work intensive and require many time consuming steps so as to obtain multilayer structures with a sufficient number of layers, making the obtained multilayer structures expensive.

### Object of the present invention

In view of the above described shortcomings of the prior art, it was the object of the present invention to provide new methods for producing a ceramic multilayer structure, with which multilayer structures can be produced in an easier and less labour intensive way, and with which multilayer structures having any number of ceramic layers can be obtained in a short amount of time and in a cost efficient way.

### Brief description of the invention

The above object is achieved by a method for producing a multilayer structure, comprising the steps of:
- providing a laminate of a first electrode or electrode precursor layer, an electrolyte layer, and a second electrode or electrode precursor layer;
- folding the tape at least once; and
- sintering the stack.

The above object is further achieved by method for producing a multilayer structure, comprising the steps of:
- providing a laminate of a first electrode or electrode precursor layer, an electrolyte layer, and a second electrode or electrode precursor layer;
- rolling the laminate so as to obtain a tubular structure; and
- sintering the stack.

The above object is moreover achieved by a method for producing a multilayer structure, comprising the steps of:
- providing a first electrode or electrode precursor layer;
- providing an electrolyte layer on the first electrode layer;
- providing a second electrode or electrode precursor layer;
- laminating the first electrode or electrode precursor layer, the electrolyte layer and the second electrode or electrode precursor layer on top of each other;
- stacking at least two of the obtained laminates on each other under pressure, and
- sintering the stack.

The above object is furthermore achieved by a method for producing a multilayer structure, comprising the steps of:
- providing an electrolyte layer;
- applying a blocking layer on at least one part of a surface of the electrolyte layer, wherein the applied blocking layer covers at least one side including both edges of the electrolyte layer;
- providing an electrode or electrode precursor layer on the electrolyte layer on the same side of the electrolyte layer where the blocking layer has been applied, wherein the electrode layer or electrode precursor layer covers the surface of the electrolyte layer which was not covered by the blocking layer, so as to obtain a laminate;
- stacking at least two laminates such that the electrolyte layer of each laminate being stacked is applied on the electrode layer of the stack on which it is stacked; and such that the blocking layer of each laminate being stacked is on the horizontally opposite side of the blocking layer of the laminate on which it is stacked; and
- sintering the stack.

The above object is finally achieved by a multilayer structure, obtainable by any of said methods.

Preferred embodiments are set forth in the subclaims and the following detailed description.

### Brief description of the drawings

Figure 1 illustrates schematically the manufacture of a multilayer structure in accordance with the present invention by laminating the respective layers, folding them and pressing them under elevated temperature.
Figure 2 illustrates schematically another method of producing a multilayer structure in accordance with the present invention by laminating the respective layers, and rolling them to obtain a tubular structure.
Figures 3a and 3b illustrate schematically another method of producing a multilayer structure in accordance with the present invention, wherein blocking layers (2) are applied to the surface of the electrolyte layers (1).

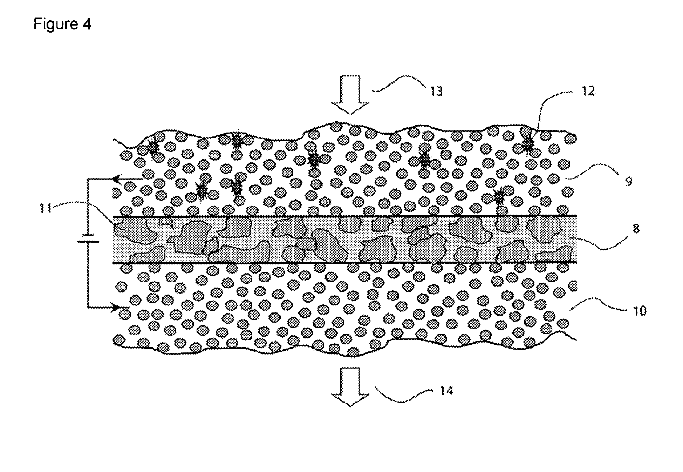

Figure 4 illustrates the principle of a flue gas cleaning cell that allow for removal of both soot and NOx in one reactor.
Figure 5 illustrates schematically the geometry where the electrolyte (1) is dense and the electrodes (3) are porous. In this example the exhaust gas flows along the layers.
Figure 6 is a micrograph of a laminated multilayered structure with 11 layers.
Figure 7 shows the performance of the cell illustrated in Figure 6 at an operation temperature of 400°C. The increase in current upon addition of NO₂ implies the conversion of NO₂ to N₂ and O₂.

### Detailed description of the invention

### - First embodiment

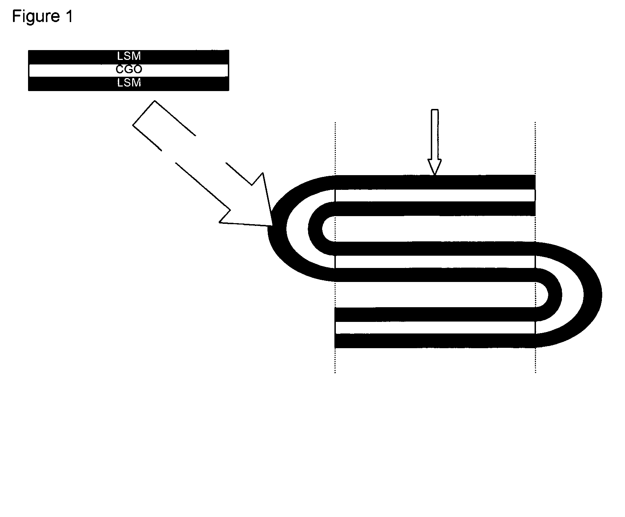

The present invention provides a method for producing a multilayer structure, comprising the steps of:
- providing a laminate of a first electrode or electrode precursor layer, an electrolyte layer, and a second electrode or electrode precursor layer;
- folding the laminate at least once; and
- sintering the stack. In the first step of the method of the present invention, a laminate of a first electrode or electrode precursor layer, an electrolyte layer, and a second electrode or electrode precursor layer is provided. The laminate may, for example, be obtained by tape casting or screen printing the layers on top of each other. Alternatively, the layers may be obtained as separate layers, and then laminated on top of each other. The two layers may be laminated together by placing the tapes on top of each other and passing it between heated rolls, or by pressing it between heated plates. Tape casting or screen printing is however preferred in order to obtain the laminate.
   In the second step, the laminate is folded at least once, as illustrated in Figure 1. Depending on the desired number of layers, the laminate may be folded repeatedly. The laminate is folded such that the electrolyte layer forms the middle part of the folded laminate and the electrode layers are the outer parts. The laminates may also be folded such that the electrode layers are folded over itself as illustrated in Figure 1. Preferably, heat and pressure is applied to the folded laminate after the folding event. Particularly preferred is the folding being carried out together with a warm pressing step to ensure optimal contact of the layers.
   If heat is applied, the folding step is preferably carried out at temperatures of from 70 to 200°C, more preferably of from 90 to 180°C, and most preferably of from 130 to 160°C. If employed, the pressure during the warm pressing step is of from 0.1 to 50 MPa, more preferably of from 1 to 30 MPa, and most preferably of from 3 to 15 MPa.
   Afterwards, the folded laminate is sintered. Preferred sintering temperatures are from 900 to 1300°C, and preferably from 950 to 1250°C.
   Preferably, the method further comprises the step of cutting at least the edges of the fold. In Figure 1, the cutting line at the edges is indicated with a dotted line. The cutting step can be carried out prior or after the sintering step. Preferably, the cutting is carried out by mechanical cutting with a knife or blade, or by laser cutting.

### - Second embodiment

In the second embodiment, the present invention provides a method for producing a multilayer structure, comprising the steps of:
- providing a laminate of a first electrode or electrode precursor layer, an electrolyte layer, and a second electrode or electrode precursor layer;
- rolling the laminate so as to obtain a tubular structure; and
- sintering the stack.

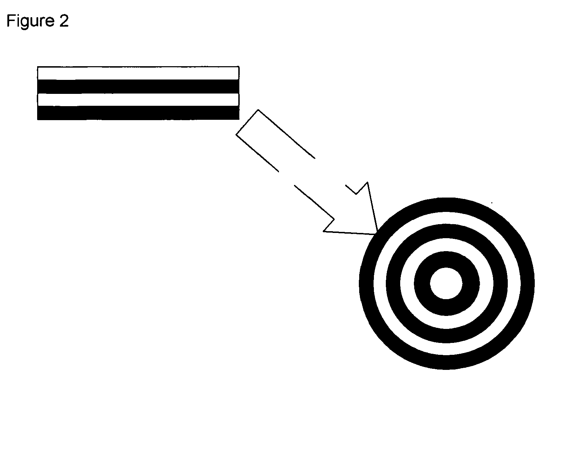

The laminate may be obtained as outlined above. The laminate may be rolled at least once so as to obtain a tubular structure, but may of course be rolled more than once, depending on the number of layers desired. In Figure 2, the principle is schematically illustrated. Preferably, the laminate is wound around a tubular core or cylinder. Said core may be removed after the rolling step, or, alternatively, left in place. If for example the cylinder is formed from an organic material, the core is burned during the subsequent sintering step of the laminate, thereby making a removal step obsolete. Alternatively, the core may be removed, and in a more preferred embodiment, reused in the method. Thereby, additional material costs can be saved, and additionally any impurities comprised in the core are not transferred to the multilayer structure.

Preferred sintering temperatures are from 900 to 1300°C, and preferably from 950 to 1250°C.

### - Third embodiment

In the third embodiment, the present invention provides a method for producing a multi-layer structure, comprising the steps of:
- providing a first electrode or electrode precursor layer;
- providing an electrolyte layer on the first electrode layer;
- providing a second electrode or electrode precursor layer;
- laminating the first electrode or electrode precursor layer, the electrolyte layer and the second electrode or electrode precursor layer on top of each other;
- stacking at least two of the obtained laminates on each other under pressure, and

### - sintering the stack.

In this embodiment, the layers are produced separately. The separate layers may be, for example, obtained by tape casting or screen printing the layers. Afterwards, the individual layers are preferably cut to obtain the desired size prior to lamination, followed by the lamination under pressure.

The pressure during the lamination step is preferably of from 0.05 to 10 MPa, more preferably of from 0.2 to 5 MPa, and most preferably of from 0.5 to 1 MPa. A lower pressure results in a non uniform layer thickness or a weak contact between each layer, which decreases the performance of the multilayer. A pressure exceeding the upper limit on the other hand results in the layers being too thin and dense, again decreasing the later performance of the multilayer structure.

The laminated multilayer structure is finally sintered. The sintering conditions in this embodiment are the same as outlined above.

### - Fourth embodiment

In the forth embodiment, the present invention provides a method for producing a multi-layer structure, comprising the steps of:
- providing an electrolyte layer;
- applying a blocking layer on at least one part of the surface of the electrolyte layer, wherein the applied blocking layer covers at least one side including both edges of the electrolyte layer;
- providing an electrode or electrode precursor layer on the electrolyte layer on the same side of the electrolyte layer where the blocking layer has been applied, wherein the electrode layer or electrode precursor layer covers the surface of the electrolyte layer which was not covered by the blocking layer, so as to obtain a laminate;
- stacking at least two laminates such that the electrolyte layer of each laminate being stacked is applied on the electrode layer of the stack on which it is stacked; and such that the blocking layer of each laminate being stacked is on the horizontally opposite side of the blocking layer of the laminate on which it is stacked; and

### - sintering the stack.

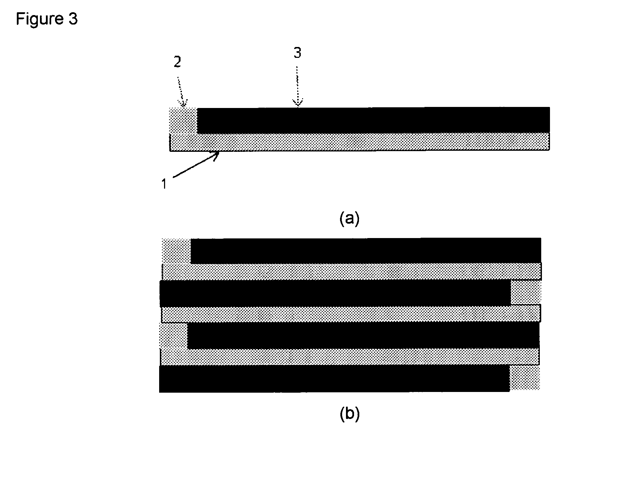

In this embodiment, a blocking layer is directly applied on the electrolyte, as indicated in Figure 3a. The blocking layer covers at least a part of the surface of the electrolyte layer including at least on side of the layer together with both edges. An electrode layer or electrode precursor layer is then applied on the surface of the electrolyte layer not covered by the blocking layer. The electrode is however not applied on the blocking layer. Preferably, both layers, i.e. the blocking layer and the electrode layer, which are applied on the electrolyte layer have an identical thickness. Afterwards, the obtained laminates are stacked in such a way that the respective blocking layers are horizontally on opposite sides, as also illustrated in Figure 3b.

The laminated multilayer structure is finally sintered. The sintering conditions in this embodiment are the same as outlined above.

In this embodiment, internal manifolds may be included prior to the sintering step. Advantageously, this method allows to obtain a multilayer structure with internal manifolds, including blocking layers, in a very work efficient way. The design of the blocking layer may of course be fine tuned, depending on the desired application of the multilayer structure.

### - Multilayer structure

Preferably, the number of layers deposited with any of the above methods is at least 5. More preferred is the number of layers deposited being at least 20, with the number of layers of at least 50 being most preferred.

Preferably, the thickness of each deposited layer in the multilayer structure of the present invention is from 0.5 to 40 µm in the dry state, more preferably from 1 to 20 µm and even more preferably from 2 to 10 µm. Of course, the thickness can be below or above said values if desired, depending on the intended application of the multi-layer structure.

Preferred materials for the electrode of the multilayered structure comprise one or more materials selected from the group of (Ma₁₋ₓMbₓ)(Mc_{1-y}Md_{y})O_{3-δ}, doped ceria or doped zirconia, or mixtures thereof. Ma = lanthanides (Ln) or Y, preferably La. Mb = earth alkali elements, preferably Sr. Mc and Md are one or more elements chosen from the group of transition metals, preferably one or more of the type Mn, Fe, Co, Ni. Preferred materials for the electrolyte of the multilayered structure comprise one or more materials selected from the group of doped ceria, doped zirconia, doped lanthanum gallate. In the above formula, x is from 0 to 1, preferably from 0.1 to 0.9, and more preferably from 0.3 to 0.7. Y is from 0 to 1, preferably from 0.1 to 0.9, and more preferably from 0.3 to 0.7. δ is the possible oxygen deficiency and relates to the variation in the oxygen stoichiometry, which is depended from, for example, the temperature and oxygen partial pressure during the manufacture of the materials, as is well known to a person skilled in the art.

In another preferred embodiment, NOx getter materials can be impregnated into the multilayer structure. It is preferred to use alkali metal or alkali earth metal oxides or precursor materials thereof as NO getter materials, such as barium oxide or calcium oxide.

After the impregnation with a catalyst material or catalyst precursor material has been completed, preferably current collectors are applied to the outermost layers.

The electrode layers or electrode precursor layers may preferably be porous layers. The porosity is preferably of from 20 to 80% in the green state, more preferably of from 30 to 70%, and most preferably of from 40 to 60%. Porosity is determined by a mercury intrusion method described in chapter 4 in "Analytical Methods in Fine Particle Technology" by Paul A. Webb and Clyde Orr, published by Micromeritics Instrument Corporation, GA, USA, 1997.

The multilayer structure obtainable with the method of the present invention may be used in applications such as electrical devices, structural/mechanical devices which require a high mechanical strength, as a membrane component for flue gas cleaning, for piezo-ceramic multilayer components (actuators, sensors, transducers etc.), for multi-layer transformers and for multilayer capacitors, multilayer capacitors, and for structural multilayer components having a controlled fracture mode.

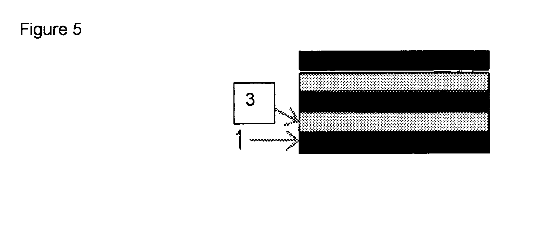

The multilayer structures are especially suitable for use in flue gas cleaning applications. Figure 5 illustrates the principle of a flue gas cleaning cell that allow for removal of both soot and NOx in one reactor. The reactor comprises a symmetrical construction having an oxide ion conducting electrolyte layer 8 sandwiched between two electrode layers 9, 10. In the configuration shown in Figure 5, all the layers are porous, and the flue gas passes across the structure. On the cathode side 10, NO is reduced by electrons (e⁻) to N₂ gas and oxide ions (O⁻⁻). The oxide ions are transported through the electrolyte material 11 of the electrolyte layer 8 to the anode side 9 where they react with the soot particles (C, 12) and form CO₂ and electrons. By alternating the voltage across the reactor, the electrodes will shift from anode to cathode thus removing PM or NO, respectively. The gas flow 13 enters the structure, and the gas flow 14 exits the structure in Figure 5.

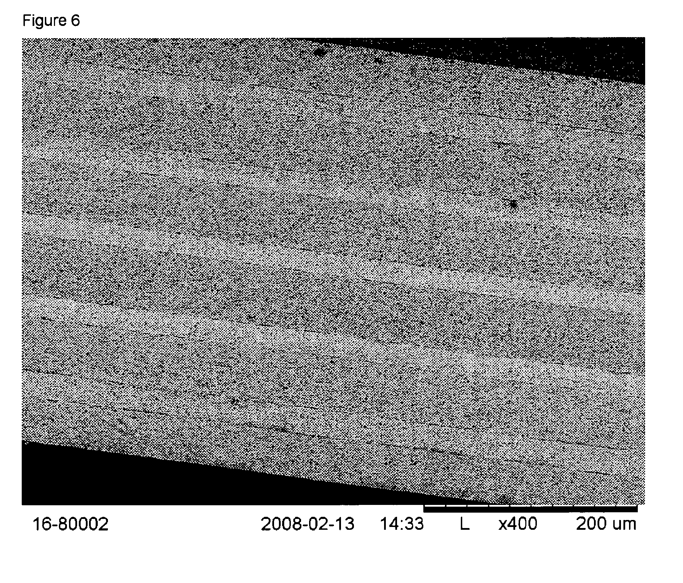

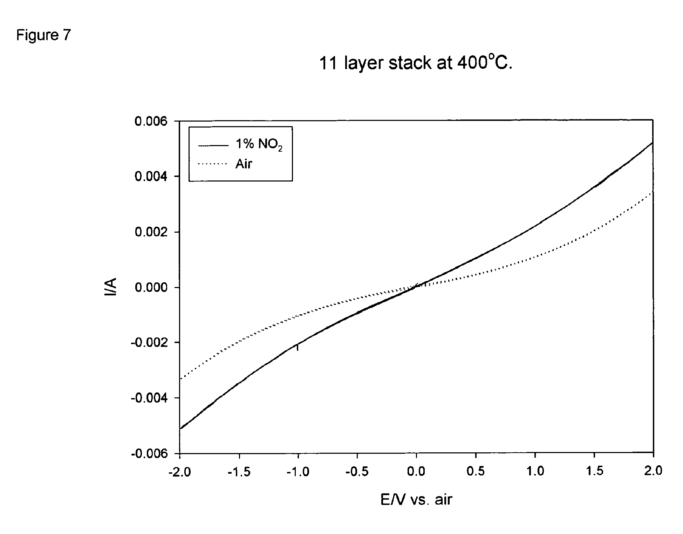

Figure 6 is a micrograph of a multilayer structure in accordance with the present invention. The specific multilayer structre shown includes 11 layers and was obtained as described in example 15. The multilayer structure was tested at an operation temperature of 400°C, and the results are shown in Figure 7. The increase in current upon addition of 1% NO₂ implies a conversion of NO₂ into N₂ and O₂.

Advantageously, with the multilayer structures of the present invention, NO₂ conversion at temperatures as low as 400°C is achieved, using materials such as the described perovskites, for example LSM. This temperature is in the range of typical flue gas temperatures; therefore, no further heating is required for operation, thus decreasing the energy demand for operation. Additionally, the lower operating temperature widens the range of compatible materials that can be used, and reduces the degradation of the cell.

The multilayer structures of the present invention may be used in a co-flow or cross flow design, i.e. the air flow may be parallel to the layers (co-flow), or may be across the layers, as illustrated in Figure 5.

In the following, the invention will be illustrated by examples. Alternative embodiments and examples exist without departing from the scope of the present invention.

### Examples

### Example 1:

A flue gas purifier was prepared by lamination, folding and warm pressing of CGO and LSM tapes. The obtained multilayer structure is suitable to be used for cross flow flue gas configurations.

### Step 1: Preparation of tapes

Suspensions for tape-casting were manufactured by means of ball milling of powders with polyvinyl pyrrolidone (PVP), menhaden fish oil, polyvinyl butyral (PVB) and EtOH + MEK as additives. After control of particle size, the suspensions were tape-cast using a double doctor blade system and the obtained layers were subsequently dried.

Layer 1: The suspension comprised Ce_{0.9}Gd_{0.1}O₂ (CGO) and 10 vol% graphite as a filler. The green thickness of the tape-cast layer was in the range of 20 µm. The porosity of this layer was in the range of 50% after sintering.

Layer 2: The suspension comprised La_{0.75}Sr_{0.25}Mn_{1.05}O_{3-δ} (LSM). As a pore former 10 vol% graphite was added. The green thickness of the tape-cast layer was about 20 µm. The porosity of this layer was about 50% after sintering.

### Step 2: Preparation of a layered structure

A CGO tape (layer 1) was sandwiched between LSM tapes (layer 2) and all three layers were laminated together. The tapes were then folded as shown in Figure 1 so that the total number of CGO layers was 30. The so folded tapes were warm pressed at a temperature of 200°C under a load of 5 MPa for 2 minutes. Edges of the multilayered structure were removed by cutting (dotted line in Figure 1). The multilayered structure was then heated to 1200°C for 2 hrs.

The so formed multilayer structure is now ready for being built into a flue gas cleaning reactor.

### Example 2:

A multilayer structure was obtained as outlined in Example 1, but the warm pressed package was sintered before the edges were removed by laser cutting.

### Example 3:

A multilayer structure was obtained as outlined in Example 1 but the porous multilayered layered body was subsequently impregnated five times with a saturated solution of Ba(NO₃)₂.

### Example 4

A flue gas purifier was prepared by lamination, folding and warm pressing of CGO and CGO/LSM tapes. The obtained multilayer structure is suitable to be used for cross flow flue gas configurations.

### Step 1: Preparation of tapes

Suspensions for tape-casting were manufactured by means of ball milling of powders with polyvinyl pyrrolidone (PVP), menhaden fish oil, polyvinyl butyral (PVB) and EtOH + MEK as additives. After control of particle size, the suspensions were tape-cast using a double doctor blade system and the obtained layers were subsequently dried.

Layer 1: The suspension comprised Ce_{0.9}Gd_{0.1}O₂ (CGO10) and 10 vol% graphite as a filler. The green thickness of the tape-cast layer was in the range of 20 µm. The porosity of this layer was in the range of 50% after sintering.

Layer 2: The suspension comprised a mixture of La_{0.75}Sr_{0.25}Mn_{1.05}O_{3-δ} (LSM) and CGO10 (1:1 volume ratio). As a pore former 10 vol% graphite was added. The green thickness of the tape-cast layer was about 20 µm. The porosity of this layer was about 50% after sintering.

### Step 2: Preparation of a layered structure

A CGO tape (layer 1) was sandwiched between CGO-LSM (layer 2) tapes and all three layers were laminated together. The tapes were then folded as shown in Example 1 so that the total number of CGO layers was 30. The so folded tapes were warm pressed at a temperature of 200°C under a load of 5 MPa for 2 minutes. Edges of the multilayered structure were removed by cutting (dotted line in Figure 1). The multilayered structure was then heated to 1200°C for 2 hrs.

The so formed multilayer structure is now ready for being built into a flue gas cleaning reactor.

### Example 5:

A multilayer structure was obtained as outlined in Example 4, but the warm pressed package was sintered before the edges were removed by laser cutting.

### Example 6:

A multilayer structure was obtained as outlined in Example 4. The porous multilayered layered body was subsequently impregnated five times with a saturated solution of Ba(NO₃)₂.

### Example 7:

A LSM supported flue gas purifier was prepared by lamination, folding and warm pressing of CGO and LSM tapes. The obtained multilayer structure is suitable to be used for cross flow flue gas configurations.

### Step 1: Preparation of tapes

CGO (layer 1) and LSM (layer 2) tapes were prepared following step 1 in Example 4.

### Step 2: Preparation of a support tape

300 µm thick LSM tape (layer 3) was prepared by tape casting a mixture of LSM powders and organic binder system, similar to that in step 1.

### Step 3: Preparation of a layered structure

A CGO tape (layer 1) was sandwiched between LSM tapes (layer 2) and all three were laminated together. The tapes were then folded as shown in Figure 1. Folded tapes were warm pressed at a temperature of 200°C under a load of 5 MPa for 2 minutes. Edges of the multilayered structure were removed (dotted line in Figure 1). The multilayered body was then laminated with the LSM support tape from step 2 (layer 3) and heated to 1000°C for 2 hrs.

The so formed multilayer structure is now ready for being built into a flue gas cleaning reactor.

### Example 8:

A flue gas purifier was prepared by lamination, folding and warm pressing of CGO and CGO/LSM tapes. The obtained multilayer structure is suitable to be used for cross flow flue gas configurations.

### Step 1: Preparation of tapes

Suspensions for tape-casting were manufactured by means of ball milling of powders with polyvinyl pyrrolidone (PVP), menhaden fish oil, polyvinyl butyral (PVB) and EtOH + MEK as additives. After control of particle size, the suspensions were tape-cast using a double doctor blade system and the obtained layers were subsequently dried.

Layer 1: The suspension comprised Ce_{0.9}Gd_{0.1}O₂ (CGO10). The green thickness of the tape-cast layer was around 15 µm. The porosity of this layer was around 10% after sintering.

Layer 2: The suspension comprised a mixture of La_{0.75}Sr_{0.25}Mn_{1.05}O_{3-δ} (LSM) and CGO10 (1:1 volume ratio). As a pore former 10 vol% graphite was added. The green thickness of the tape-cast layer was about 20 µm. The porosity of this layer was about 50% after sintering.

### Step 2: Preparation of a layered structure

A CGO tape (layer 1) was sandwiched between CGO-LSM (layer 2) tapes and all three layers were laminated together. The tapes were then folded as shown in Figure 1 so that the total number of CGO layers was 30. The so folded tapes were warm pressed at a temperature of 200°C under a load of 5 MPa for 2 minutes. Edges of the multilayered structure were removed by cutting (dotted line in Figure 1). The multilayered structure was then heated to 1250°C for 2 hrs.

The porous multilayered layered body was subsequently impregnated five times with a saturated solution of Ba(NO₃)₂. The so formed multilayer structure is now ready for being built into a flue gas cleaning reactor.

### Example 9:

A flue gas purifier was prepared by lamination and rolling.

### Step 1: Preparation of tapes

CGO and CGO-LSM tapes were prepared following step 1 in Example 4.

### Step 2: Lamination and rolling of tapes

Two tapes each of CGO and CGO-LSM were laminated and rolled around a cylinder core till the roll was 500 µm thick (see Figure 2). The cylinder was removed and the rolled tapes sintered.

### Step 3: Sintering

The multilayered structure was then heated to 1250°C for 2 hrs. The porous multilayered layered body I now ready to be build in to a reactor.

### Example 10:

A flue gas purifier was prepared by lamination, and rolling.

### Step 1: Preparation of tapes

CGO and LSM tapes were prepared following step 1 in Example 1.

### Step 2: Lamination and rolling of tapes

Two tapes each of CGO and LSM were laminated and rolled around a cylinder till the roll was 500 µm thick (see Figure 2). The cylinder was removed and the rolled tapes sintered.

### Step 3: Sintering

The structure was sintered as outlined in Example 5.

### Example 11:

A flue gas purifier was prepared by lamination and rolling of the tapes.

### Step 1: Preparation of tapes

CGO and LSM tapes were prepared following step 1 in Example 1.

### Step 2: Preparation of a LSM tube

A LSM tube was prepared by extruding a paste consisting of LSM powders and an organic binder system.

### Step 3: Lamination and rolling of tapes

Two tapes each of CGO and LSM were laminated and rolled around the LSM tube (from step 2) till the roll was 500 µm thick (see Figure 2).

### Step 4: Sintering

The multilayered structure was then heated to 1200°C for 2 hrs. The porous multilayered layered body was subsequently impregnated five times with a saturated solution of Ba(NO₃)₂.

### Example 12:

A flue gas purifier was prepared warm pressing of CGO and CGO/LSM tapes. The obtained multilayer structure is suitable to be used for cross flow flue gas configurations.

### Step 1: Preparation of tapes

Tapes are being manufactured as described in Example 2. The tapes were cut into pieces of 15x15 cm.

### Step 2: Preparation of a layered structure

CGO and CGO-LSM tapes were placed on top of each other one by one and were subsequently warm pressed at a temperature of 200°C under a load of 5 MPa for 2 minutes. The multilayered structure was then heated to 1200°C for 2 hrs. After sintering the porosity is approximately 50% in both types of layer. After sintering the uneven edges were removed by laser cutting. The so formed multilayer structure is now ready for being built into a flue gas cleaning reactor.

### Example 13:

A flue gas purifier with dense electrolyte layer was prepared by warm pressing of CGO and LSM tapes. The obtained multilayer structure is suitable to be used for cross flow flue gas configurations.

### Step 1: Preparation of tapes

The tapes were prepared as outlined in Example 4. The tapes were cut into pieces of 15x15 cm. 2 wt% cobalt oxide was added to the CGO tape as sintering aid.

### Step 2: Preparation of a layered structure

CGO and CGO-LSM tapes were placed on top of each other one by one and were subsequently war pressed at a temperature of 200°C under a load of 5 MPa for 2 minutes. The multilayered structure was then heated to 1250°C for 2 hrs. After sintering the porosity of the electrolyte layer is approximately 50% whereas the electrolyte (CGO) layer has a density above 96%. After sintering the uneven edges were removed by laser cutting. The layered structure is for co-flow as illustrated in Figure 5. The so formed multi-layer structure is now ready for being built into a flue gas cleaning reactor.

### Example 14:

A flue gas purifier with a porous electrolyte layer was prepared by warm pressing CGO and LSM tapes. The obtained multilayer structure is suitable to be used for cross flow flue gas configurations.

### Step 1: Preparation of tapes

15 µm CGO tapes were prepared by tape casting of CGO powders, filler material and organic binder system, as described in Example 2.

### Step 2: Preparation of inks for screen printing

A CGO - LSM ink (1:1 volume ratio) were prepared using a mixture of LSM and CGO powders, a filler material and an organic binder system. Furthermore, a NiO ink for blocking of the electrode was prepared similarly.

### Step 3: Preparation of a layered structure

CGO tapes were cut into 10x10 cm² pieces by knife cutting. Then a NiO layer was deposited by screen printing a NiO ink along one side of the CGO tape, as illustrated in Figure 3a. After drying and the NiO layer, a CGO-LSM electrode layer is deposited by screen printing of the CGO-LSM ink on the rest of the surface. (Fig. 3a) After drying the screen printed pieces are stacked as illustrated in Figure 3b and warm pressed as described in previous examples. The stack comprises 25 electrolyte layers.

The multilayered structure was then heated to 1200°C for 2 hrs. After sintering the porosity is approximately 50-60% in electrode and electrolyte of layers, whereas the CGO blocking layer had less than 10% porosity.

The so formed multilayer structure is now ready for being built into a flue gas cleaning reactor.

### Example 15:

A flue gas purifier was prepared by lamination of CGO and CGO-LSM tapes. The obtained multilayer structure is suitable to be used for cross flow flue gas configurations.

### Step 1: Preparation of tapes

Suspensions for tape-casting were manufactured by means of ball milling of powders with polyvinyl pyrrolidone (PVP), menhaden fish oil, polyvinyl butyral (PVB) and EtOH + MEK as additives. After control of particle size, the suspensions were tape-cast using a double doctor blade system and the obtained layers were subsequently dried.

Layer 1: The suspension comprised Ce_{0.9}Gd_{0.1}O₂ (CGO) and 5 vol% graphite as a filler. The green thickness of the tape-cast layer was in the range of 20 µm. The porosity of this layer was in the range of 30% after sintering.

Layer 2: The suspension comprised a mixture of La_{0.75}Sr_{0.25}Mn_{1.05}O_{3-δ} (LSM) and CGO10 (1:1 volume ratio). As a pore former 5 vol% graphite was added. The green thickness of the tape-cast layer was about 40 µm. The porosity of this layer was about 30% after sintering.

### Step 2: Preparation of a layered structure

The CGO and CGO-LSM tapes were laminated by passing them under rolls heated at 150°C at a pressure of 0.6 MPa. CGO-LSM tape was then placed on top of the CGO in the CGO, CGO-LSM laminate and laminated under same conditions. CGO tape was then placed on top of the CGO-LSM tape of the laminate and laminated. This process was repeated till there were 11 layers. The multilayered structure was then heated at 1250°C for 2 hours. The resulting microstructure is shown in Figure 6. The so formed multilayer structure is now ready for being built into a flue gas cleaning reactor.

The multilayered structure produced in example 15 was tested at 400°C and the result is shown in Figure 7. The increase in current upon addition of NO₂ implies conversion of NO₂ into N₂ and O₂.

### Example 16

A flue gas purifier was prepared by lamination, folding and warm pressing of CGO and CGO/LSCF (La_{0.6}Sr_{0.4})_{0.97}(Fe_{0.8}Co_{0.2})O₃ tapes. The obtained multilayer structure is suitable to be used for cross flow flue gas configurations.

### Step 1: Preparation of tapes

Suspensions for tape-casting were manufactured by means of ball milling of powders with polyvinyl pyrrolidone (PVP), menhaden fish oil, polyvinyl butyral (PVB) and EtOH + MEK as additives. After control of particle size, the suspensions were tape-cast using a double doctor blade system and the obtained layers were subsequently dried.

Layer 1: The suspension comprised Ce_{0.9}Gd_{0.1}O_{1.95} (CGO10) and 10 vol% graphite as a filler. The green thickness of the tape-cast layer was in the range of 20 µm. The porosity of this layer was in the range of 50% after sintering.

Layer 2: The suspension comprised a mixture of LSCF and CGO10 (1:1 volume ratio). As a pore former 10 vol% graphite was added. The green thickness of the tape-cast layer was about 20 µm. The porosity of this layer was about 50% after sintering.

### Step 2: Preparation of a layered structure

A CGO tape (layer 1) was sandwiched between CGO-LSCF (layer 2) tapes and all three layers were laminated together. The tapes were then folded as shown in Example 1 so that the total number of CGO layers was 30. The so folded tapes were warm pressed at a temperature of 200°C under a load of 5 MPa for 2 minutes. Edges of the multilayered structure were removed by cutting (dotted line in Figure 1). The multilayered structure was then heated to 1200°C for 2 hrs.

The so formed multilayer structure is now ready for being built into a flue gas cleaning reactor.

### Example 17

A flue gas purifier was prepared by lamination, folding and warm pressing of CGO and CGO/LSCF (La_{0.6}Sr_{0.4})_{0.97}CoO₃ tapes. The obtained multilayer structure is suitable to be used for cross flow flue gas configurations.

### Step 1: Preparation of tapes

Suspensions for tape-casting were manufactured by means of ball milling of powders with polyvinyl pyrrolidone (PVP), menhaden fish oil, polyvinyl butyral (PVB) and EtOH + MEK as additives. After control of particle size, the suspensions were tape-cast using a double doctor blade system and the obtained layers were subsequently dried.

Layer 1: The suspension comprised Ce_{0.9}Gd_{0.1}O_{1.95} (CGO10) and 10 vol% graphite as a filler. The green thickness of the tape-cast layer was in the range of 20 µm. The porosity of this layer was in the range of 50% after sintering.

Layer 2: The suspension comprised a mixture of LSC and CGO10 (1:1 volume ratio). As a pore former 10 vol% graphite was added. The green thickness of the tape-cast layer was about 20 µm. The porosity of this layer was about 50% after sintering.

### Step 2: Preparation of a layered structure

A CGO tape (layer 1) was sandwiched between CGO-LSC (layer 2) tapes and all three layers were laminated together. The tapes were then folded as shown in Example 1 so that the total number of CGO layers was 30. The so folded tapes were warm pressed at a temperature of 200°C under a load of 5 MPa for 2 minutes. Edges of the multilayered structure were removed by cutting (dotted line in Figure 1). The multilayered structure was then heated to 1200°C for 2 hrs.

The so formed multilayer structure is now ready for being built into a flue gas cleaning reactor.

## Claims

1. A method for producing a multilayer structure, comprising the steps of:
- providing a laminate of a first electrode or electrode precursor layer, an electrolyte layer, and a second electrode or electrode precursor layer;
- folding the laminate at least once; and
- sintering the stack.

2. The method of claim 1, further comprising the step of cutting at least the edges of the fold prior or after the sintering step.

3. A method for producing a multilayer structure, comprising the steps of:
- providing a laminate of a first electrode or electrode precursor layer, an electrolyte layer, and a second electrode or electrode precursor layer;
- rolling the laminate so as to obtain a tubular structure; and
- sintering the stack.

4. A method for producing a multilayer structure, comprising the steps of:
- providing a first electrode or electrode precursor layer;
- providing an electrolyte layer on the first electrode layer;
- providing a second electrode or electrode precursor layer;
- laminating the first electrode or electrode precursor layer, the electrolyte layer and the second electrode or electrode precursor layer on top of each other;
- stacking at least two of the obtained laminates on each other under pressure, and
- sintering the stack.

5. A method for producing a multilayer structure, comprising the steps of:
- providing an electrolyte layer;
- applying a blocking layer on at least one part of a surface of the electrolyte layer, wherein the applied blocking layer covers at least one side including both edges of the electrolyte layer;
- providing an electrode or electrode precursor layer on the electrolyte layer on the same side of the electrolyte layer where the blocking layer has been applied, wherein the electrode layer or electrode precursor layer covers the surface of the electrolyte layer which was not covered by the blocking layer, so as to obtain a laminate;
- stacking at least two laminates such that the electrolyte layer of each laminate being stacked is applied on the electrode layer of the stack on which it is stacked; and such that the blocking layer of each laminate being stacked is on the horizontally opposite side of the blocking layer of the laminate on which it is stacked; and
- sintering the stack.

6. The method of any of claims 1 to 5, wherein the obtained sintered multilayer structure has at least 15 layers.

7. The method of any of claims 1 to 5, wherein the sintered multilayer structure has at least 30 layers.

8. The method of any of claims 1 to 7, wherein the electrolyte layer comprises a material selected from the group of doped gallates, doped ceria Ce₁₋ₓMₓO_{2-δ}, where M = Ca, Sm, Gd, Sc, Ga, Y and/or any Ln element, or combinations thereof; and doped zirconia Zr₁₋ₓMₓO_{2-δ}, where M = Sc, Y, Ce, Ga or combinations thereof.

9. The method of any of claims 1 to 8, wherein the electrode layer comprises a material selected from the group of (Ma₁₋ₓMbₓ)(Mc_{1-y}Md_{y})O_{3-δ}, doped ceria or doped zirconia, or mixtures thereof, with Ma = lanthanides (Ln) or Y,

10. The method of any of claims 1 to 9, wherein the sintering temperature is from 900 to 1300°C.

11. The method of claim 2, further comprising the step of providing a core around which the tape is rolled at least once.

12. The method of claim 9, further comprising the step of removing the core after the tape has been rolled around the core at least once.

13. A multilayer structure, obtainable by the methods of any of claims 1 to 12.

14. Use of the multilayer structure of claim 13 for flue gas cleaning.
